(19) Europäisches Patentamt
European Patent Office
Office européen des brevets

(11) EP 3 572 240 B1

(12) **EUROPEAN PATENT SPECIFICATION**

(45) Date of publication and mention of the grant of the patent:
**12.08.2020 Bulletin 2020/33**

(51) Int Cl.:
***B60C 1/00*** (2006.01) ***C08L 9/06*** (2006.01)

(21) Application number: **19169393.6**

(22) Date of filing: **16.04.2019**

(54) **RUBBER COMPOSITION FOR TREAD AND PNEUMATIC TIRE**

KAUTSCHUKZUSAMMENSETZUNG FÜR LAUFFLÄCHEN UND LUFTREIFEN

COMPOSITION DE CAOUTCHOUC POUR BANDE DE ROULEMENT ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.05.2018 JP 2018098910**

(43) Date of publication of application:
**27.11.2019 Bulletin 2019/48**

(73) Proprietor: **Sumitomo Rubber Industries Ltd.**
**Kobe-shi, Hyogo 651-0072 (JP)**

(72) Inventors:
- **NISHIOKA, Kazuyuki**
**Kobe-shi,, Hyogo 651-0072 (JP)**
- **MAEKAWA, Tetsuya**
**Kobe-shi,, Hyogo 651-0072 (JP)**
- **NAOYA, Sofue**
**Kobe-shi,, Hyogo 651-0072 (JP)**
- **IKEDA, Keiji**
**Kobe-shi,, Hyogo 651-0072 (JP)**

(74) Representative: **TBK**
**Bavariaring 4-6**
**80336 München (DE)**

(56) References cited:
**EP-A1- 2 944 669**
**WO-A1-2018/190427**
**WO-A1-2018/190430**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND OF THE INVENTION

Field of the Invention

The present invention relates to a rubber composition for a tread and a pneumatic tire.

Description of the Background Art

Tires are required to have grip performance such as dry grip performance and wet grip performance in order to ensure safety, etc. In order to meet this requirement, styrene-butadiene rubber is generally used as a rubber component. However, when the styrene-butadiene rubber is used, abrasion resistance tends to decrease.

As methods for improving grip performance and abrasion resistance, a method in which a mercapto silane coupling agent is blended together with silica (see, for example, Japanese Laid-Open Patent Publication Nos. 2017-141405 and 2016-47887) and a method in which an aromatic modified terpene-based resin is blended (see, for example, International Publication WO2013/157545 and Japanese Laid-Open Patent Publication No. 2014-218549) have been studied. However, in recent years, further improvement has been desired.

The present invention has been made to solve the above-described problem, and an object of the present invention is to provide a rubber composition, for a tread, that can improve dry grip performance, wet grip performance, and abrasion resistance in a balanced manner, and a pneumatic tire in which the rubber composition is used.

SUMMARY OF THE INVENTION

The present invention is directed to a rubber composition for a tread, the rubber composition containing: a rubber component containing styrene-butadiene rubber; silica; a mercapto silane coupling agent; a styrene-based resin; and a terpene-based resin, wherein a total vinyl content of the styrene-butadiene rubber is less than 35% by mass, and the following expressions (A) and (B) are satisfied.

$$(A)\ 0.2 \leq \alpha 1/\alpha 2 \leq 20$$

$$(B)\ \beta/(\alpha 1+\alpha 2) \leq 8$$

$\alpha 1$: an amount of the styrene-based resin per 100 parts by mass of the rubber component [parts by mass]
$\alpha 2$: an amount of the terpene-based resin per 100 parts by mass of the rubber component [parts by mass]
$\beta$: an amount of the silica per 100 parts by mass of the rubber component [parts by mass].

The expression (A) is preferably $0.4 \leq \alpha 1/\alpha 2 \leq 2.5$.

An amount of the styrene-butadiene rubber in 100% by mass of the rubber component is preferably not less than 60% by mass.

The styrene-butadiene rubber preferably has a weight average molecular weight not less than 400 thousand.

The mercapto silane coupling agent is preferably a silane coupling agent represented by the following formula (S1).

[Chem. 1]

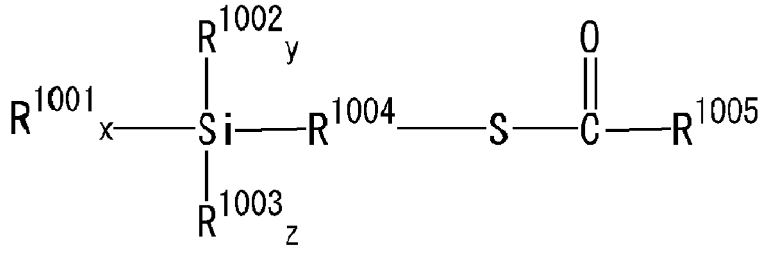

(S1)

(wherein $R^{1001}$ represents a monovalent group selected from -Cl, -Br, $-OR^{1006}$, $-O(O=)CR^{1006}$, - $ON=CR^{1006}R^{1007}$, $-NR^{1006}R^{1007}$, and $-(OSiR^{1006}R^{1007})_h(OSiR^{1006}R^{1007}R^{1008})$ (wherein $R^{1006}$, $R^{1007}$, and $R^{1008}$ may be the same or may be different from each other and each represent a hydrogen atom or a monovalent hydrocarbon group having 1 to 18 carbon atoms, and an average of "h" is 1 to 4), $R^{1002}$ represents $R^{1001}$, a hydrogen atom, or a monovalent hydrocarbon group having 1 to 18 carbon atoms, $R^{1003}$ represents a $-[O(R^{1009}O)_j]-$ group ($R^{1009}$ is an alkylene group having 1 to 18 carbon atoms, and "j" is an integer from 1 to 4), $R^{1004}$ represents a divalent hydrocarbon group having 1 to 18 carbon atoms, $R^{1005}$ represents a monovalent hydrocarbon group having 1 to 18 carbon atoms, and "x", "y", and "z" are numerals that satisfy the relationships of $x + y + 2z = 3$, $0 \leq x \leq 3$, $0 \leq y \leq 2$, and $0 \leq z \leq 1$.)

The present invention is also directed to a pneumatic tire having a tread produced using the rubber composition.

According to the present invention, since the rubber composition for a tread contains: a rubber component containing styrene-butadiene rubber; silica; a mercapto silane coupling agent; a styrene-based resin; and a terpene-based resin, a total vinyl content of the styrene-butadiene rubber is less than 35% by mass, and expressions (A) and (B) are satisfied, the rubber composition can improve dry grip performance, wet grip performance, and abrasion resistance in a balanced manner.

## DESCRIPTION OF THE PREFERRED EMBODIMENTS

The rubber composition for a tread of the present invention contains a rubber component containing styrene-butadiene rubber (SBR), silica, a mercapto silane coupling agent, a styrene-based resin, and a terpene-based resin, a total vinyl content of the SBR is less than 35% by mass, and expressions (A) and (B) are satisfied.

The rubber composition achieves the above-described effect, and it is speculated that such an effect is achieved by the following action and effect.

In the case where SBR is the main component of a rubber component, grip performance is likely to improve, but abrasion resistance tends to decrease. On the other hand, in the above rubber composition, together with SBR, a styrene-based resin, which has high compatibility with SBR, and a terpene-based resin, which has low compatibility with SBR, are contained at a predetermined ratio, silica is contained at a predetermined ratio to the total amount of these ingredients, and a mercapto silane coupling agent, which has high reactivity, is further contained, whereby the dispersibility of the silica significantly improves. Accordingly, both low-temperature $\tan\delta$ and high-temperature $\tan\delta$ of the rubber composition improve, and the reinforcing effect by the silica also improves.

In addition, by setting the total vinyl content of the SBR to be within a predetermined range, the reinforcing effect by the silica improves without impairing the strength of the polymer.

Due to the above action, it is considered that dry grip performance, wet grip performance, and abrasion resistance are improved in a balanced manner.

The rubber composition contains SBR as a rubber component.

The SBR is not particularly limited, and, for example, emulsion-polymerized styrene-butadiene rubber (E-SBR), and solution-polymerized styrene-butadiene rubber (S-SBR), can be used. One of these rubbers may be used individually, or two or more of these rubbers may be used in combination.

The total vinyl content of the SBR only needs to be less than 35% by mass, but is preferably not greater than 33% by mass and more preferably not greater than 32% by mass, and is preferably not less than 10% by mass, more preferably not less than 20% by mass, and further preferably not less than 24% by mass. When the total vinyl content is within the above range, the effect tends to be more favorably achieved.

Here, the total vinyl content of the SBR is a value calculated by $\Sigma$ (vinyl content of each SBR $\times$ amount of each SBR / total amount of entire SBR). For example, in the case where the SBR in 100% by mass of the rubber component is composed of 80% by mass of a SBR (A) having a vinyl content of 20% by mass and 10% by mass of a SBR (B) having a vinyl content of 10% by mass, the total vinyl content of the SBR is 18.88% by mass ($= 20 \times 80/90 + 10 \times 10/90$). In addition, in the case where the SBR in 100% by mass of the rubber component is composed of 80% by mass of a SBR (A) having a vinyl content of 20% by mass, the total vinyl content of the SBR is 20% by mass ($= 20 \times 80/80$).

The vinyl content (1,2-bond butadiene unit content) of the SBR can be measured by infrared absorption spectrometry.

The vinyl content of the SBR (in the case where a plurality of SBRs are contained, the vinyl content of at least one of these SBRs) is preferably not less than 10% by mass, more preferably not less than 20% by mass, and further preferably not less than 24% by mass, and is preferably not greater than 60% by mass, more preferably not greater than 35% by mass, and further preferably not greater than 30% by mass. When the vinyl content of the SBR is within the above range, the effect tends to be more favorably achieved.

The styrene content of the SBR (in the case where a plurality of SBRs are contained, the styrene content of at least one of these SBRs) is preferably not less than 10% by mass, more preferably not less than 25% by mass, and further preferably not less than 40% by mass, and is preferably not greater than 70% by mass and more preferably not greater than 60% by mass. When the styrene content of the SBR is within the above range, the effect tends to be more

favorably achieved.

The styrene content of the SBR can be measured by $^{1}H$-NMR measurement.

The weight average molecular weight (Mw) of the SBR (in the case where a plurality of SBRs are contained, the Mw of at least one of these SBRs) is preferably not less than 400 thousand, more preferably not less than 1 million, further preferably not less than 1.2 million, and particularly preferably not less than 1.3 million, and is preferably not greater than 1.8 million and more preferably not greater than 1.5 million. When the Mw of the SBR is within the above range, the rubber strength improves, and better abrasion resistance is achieved.

The Mw of the SBR can be obtained by conversion, based on polystyrene standard, of a value measured by gel permeation chromatography (GPC) (GPC-8000 series manufactured by Tosoh Corporation, detector: differential refractometer, column: TSKGEL SUPERMULTIPORE HZ-M manufactured by Tosoh Corporation).

The SBR may be either unmodified SBR or modified SBR. The modified SBR only needs to be SBR having a functional group that interacts with a filler such as silica, and examples of such modified SBR include end-modified SBR obtained by modifying at least one end of SBR with a compound (modifier) having the functional group (end-modified SBR having the functional group at an end thereof), main chain-modified SBR having the functional group in the main chain thereof, main chain/end-modified SBR having the functional group in the main chain and at an end thereof (for example, main chain/end-modified SBR that has the functional group in the main chain thereof and in which at least one end thereof is modified with the modifier), and end-modified SBR that is modified (coupled) by using a multifunctional compound having two or more epoxy groups in the molecule thereof and to which a hydroxyl group or an epoxy group is introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imido group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), an alkoxysilyl group (preferably, an alkoxysilyl group having 1 to 6 carbon atoms), and an amide group are preferable.

Examples of a modifier used for the modified SBR include: polyglycidyl ethers of polyhydric alcohols such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3,-bisaminomethylcyclohexane;

Amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane;

Sulfide group-containing silane compounds such as (trimethylsilyl)[3-(trimethoxysilyl)propyl] sulfide, (trimethylsilyl) [3-(triethoxysilyl)propyl] sulfide, (trimethylsilyl) [3-(tripropoxysilyl)propyl] sulfide, (trimethylsilyl)[3-(tributoxysilyl)propyl] sulfide, (trimethylsilyl) [3-(methyldimethoxysilyl)propyl] sulfide, (trimethylsilyl) [3 - (methyldiethoxysilyl)propyl] sulfide, (trimethylsilyl)[3-(methyldipropoxysilyl)propyl] sulfide, and (trimethylsilyl) [3-(methyldibutoxysilyl)propyl] sulfide;

N-substituted azilidine compounds such as ethyleneimine and propyleneimine; alkoxysilanes such as methyltriethoxysilane,N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-di-t-butylaminobenzophenone, 4-N,N-diphenylaminobenzophenone, 4,4'- bis(dimethylamino)benzophenone, 4,4'-bis(diethylamino)benzophenone, 4,4'- bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-co-laurolactam, N-vinyl-ω-laurolactam, N-methyl-β-propiolactam, and N-phenyl-β-propiolactam; and moreover,

N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone.

Modification with the above compounds (modifiers) can be carried out by a known method.

As the SBR, for example, SBRs manufactured by and available from Sumitomo Chemical Co., Ltd., JSR Corporation, Asahi Kasei Corporation, Zeon Corporation, etc., can be used.

The amount of the SBR in 100% by mass of the rubber component is preferably not less than 60% by mass, more preferably not less than 70% by mass, and further preferably not less than 80% by mass, and is preferably not greater than 95% by mass and more preferably not greater than 90% by mass. When the amount of the SBR is within the above range, the effect tends to be more favorably achieved.

Examples of usable rubber components other than the SBR include diene-based rubbers such as butadiene rubber (BR), isoprene-based rubber, acrylonitrile-butadiene rubber (NBR), chloroprene rubber (CR), isobutylene-isoprene-rubber (IIR), and styrene-isoprene-butadiene copolymer rubber (SIBR). One of these rubbers may be used individually, or two or more of these rubbers may be used in combination. Among them, BR is preferable.

The BR is not particularly limited, and a BR having a high cis content, a BR having a low cis content, a BR containing syndiotactic polybutadiene crystal, etc., can be used. These BRs may be used individually, or two or more of these BRs may be used in combination.

The cis content of the BR is preferably not less than 90% by mass, more preferably not less than 95% by mass, and further preferably not less than 98% by mass, and the upper limit thereof is not particularly limited. When the cis content of the BR is within the above range, the effect tends to be more favorably achieved.

The cis content of the BR can be measured by infrared absorption spectrometry.

The BR may be either unmodified BR or modified BR, and examples of the modified BR include modified BR into which the aforementioned functional group is introduced.

As the BR, products of Ube Industries, Ltd., JSR Corporation, Asahi Kasei Corporation, Zeon Corporation, etc., can be used.

In the case where BR is contained, the amount of the BR in 100% by mass of the rubber component is preferably not less than 5% by mass and more preferably not less than 10% by mass, and is preferably not greater than 40% by mass, more preferably not greater than 30% by mass, and further preferably not greater than 20% by mass. When the amount of the BR is within the above range, the effect tends to be more favorably achieved.

The rubber composition contains silica.

Examples of the silica include dry-process silica (silicic anhydride) and wet-process silica (hydrous silicic acid), but wet-process silica is preferable for the reason that it has a higher silanol group content. One of these types of silica may be used individually, or two or more thereof may be used in combination.

The nitrogen adsorption specific surface area ($N_2SA$) of the silica is preferably not less than 100 $m^2/g$ and more preferably not less than 150 $m^2/g$, and is preferably not greater than 300 $m^2/g$ and more preferably not greater than 200 $m^2/g$. When the nitrogen adsorption specific surface area ($N_2SA$) of the silica is within the above range, the effect tends to be more favorably achieved.

The nitrogen adsorption specific surface area of the silica is a value measured by the BET method according to ASTM D3037-81.

As the silica, for example, products of Degussa, Rhodia, Tosoh Silica Corporation, Solvay Japan, Ltd., Tokuyama Corporation, etc., can be used.

The amount of the silica per 100 parts by mass of the rubber component only needs to be adjusted as appropriate within a range that satisfies expression (B), but is preferably not less than 50 parts by mass, more preferably not less than 65 parts by mass, and further preferably not less than 75 parts by mass, and is preferably not greater than 140 parts by mass, more preferably not greater than 120 parts by mass, and further preferably not greater than 110 parts by mass. When the amount of the silica is within the above range, the effect tends to be more favorably achieved.

The rubber composition contains a mercapto silane coupling agent.

One mercapto silane coupling agent may be used alone, or two or more mercapto silane coupling agents may be used in combination.

Examples of mercapto silane coupling agents include 3-mercaptopropyltrimethoxysilane, 3 -mercaptopropyltriethoxysilane, 2-mercaptoethyltrimethoxysilane, 2-mercaptoethyltriethoxysilane, and a compound represented by the following formula (Si363, manufactured by Evonik Degussa GmbH).

[Chem. 2]

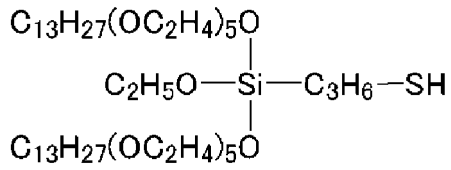

As the mercapto silane coupling agent, in addition to silane coupling agents having a mercapto group, a compound having a structure in which a mercapto group is protected by a protecting group (for example, a thioester) can also be used.

A particularly suitable mercapto silane coupling agent is a silane coupling agent represented by the following formula (S1).

[Chem. 3]

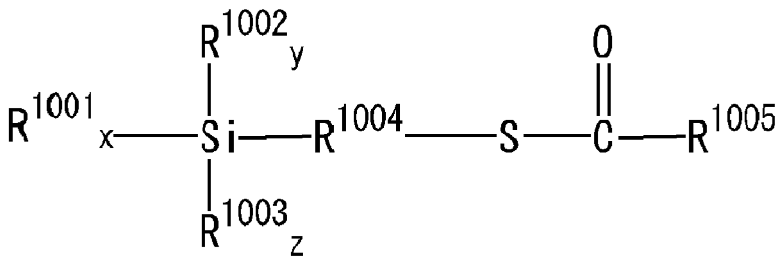

( S1 )

(wherein $R^{1001}$ represents a monovalent group selected from -Cl, -Br, -$OR^{1006}$, -O(O=)$CR^{1006}$, - ON=$CR^{1006}R^{1007}$, -$NR^{1006}R^{1007}$, and -$(OSiR^{1006}R^{1007})_h(OSiR^{1006}R^{1007}R^{1008})$ (wherein $R^{1006}$, $R^{1007}$, and $R^{1008}$ may be the same or may be different from each other and each represent a hydrogen atom or a monovalent hydrocarbon group having 1 to 18 carbon atoms, and an average of "h" is 1 to 4), $R^{1002}$ represents $R^{1001}$, a hydrogen atom, or a monovalent hydrocarbon group having 1 to 18 carbon atoms, $R^{1003}$ represents a -$[O(R^{1009}O)_j]$- group ($R^{1009}$ is an alkylene group having 1 to 18 carbon atoms, and "j" is an integer from 1 to 4), $R^{1004}$ represents a divalent hydrocarbon group having 1 to 18 carbon atoms, $R^{1005}$ represents a monovalent hydrocarbon group having 1 to 18 carbon atoms, and "x", "y", and "z" are numerals that satisfy the relationships of $x + y + 2z = 3$, $0 \le x \le 3$, $0 \le y < 2$, and $0 \le z \le 1$.)

In formula (S 1), preferably, $R^{1005}$, $R^{1006}$, $R^{1007}$, and $R^{1008}$ are each independently a group selected from the group consisting of linear, cyclic, or branched alkyl group, alkenyl group, aryl group, and aralkyl group each having 1 to 18 carbon atoms. In addition, in the case where $R^{1002}$ is a monovalent hydrocarbon group having 1 to 18 carbon atoms, $R^{1002}$ is preferably a group selected from the group consisting of linear, cyclic, or branched alkyl group, alkenyl group, aryl group, and aralkyl group. $R^{1009}$ is preferably a linear, cyclic, or branched alkylene group, and is particularly preferably a linear alkylene group. Examples of $R^{1004}$ include an alkylene group having 1 to 18 carbon atoms, an alkenylene group having 2 to 18 carbon atoms, a cycloalkylene group having 5 to 18 carbon atoms, a cycloalkylalkylene group having 6 to 18 carbon atoms, an arylene group having 6 to 18 carbon atoms, and an aralkylene group having 7 to 18 carbon atoms. The alkylene group and the alkenylene group may each be either linear or branched, and the cycloalkylene group, the cycloalkylalkylene group, the arylene group, and the aralkylene group may each have a functional group, such as a lower alkyl group, on the ring thereof. $R^{1004}$ is preferably an alkylene group having 1 to 6 carbon atoms, and is particularly preferably a linear alkylene group such as a methylene group, an ethylene group, a trimethylene group, a tetramethylene group, a pentamethylene group, and a hexamethylene group.

Specific examples of $R^{1002}$ , $R^{1005}$, $R^{1006}$, $R^{1007}$, and $R^{1008}$ in formula (S1) include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group, and a naphthylmethyl group. Examples of the linear alkylene group as $R^{1009}$ in formula (S1) include a methylene group, an ethylene group, an n-propylene group, an n-butylene group, and a hexylene group, and examples of the branched alkylene group as $R^{1009}$ in formula (S1) include an isopropylene group, an isobutylene group, and a 2-methylpropylene group.

Specific examples of the silane coupling agent represented by formula (S1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. These silane coupling agents may be used individually, or two or more of these silane coupling agents may be used in combination. Among them, 3-octanoylthiopropyltriethoxysilane is particularly preferable.

The amount of the mercapto silane coupling agent per 100 parts by mass of the silica is preferably not less than 3 parts by mass and more preferably not less than 6 parts by mass, and is preferably not greater than 15 parts by mass and more preferably not greater than 12 parts by mass. When the amount of the mercapto silane coupling agent is within the above range, the effect tends to be more favorably achieved.

The rubber composition contains a styrene-based resin.

The styrene-based resin is a polymer containing a styrene-based monomer (styrene-based compound) as a constituent monomer, and examples of the styrene-based resin include a polymer obtained by polymerization with a styrene-based monomer as a main component (not less than 50% by mass). Specifically, homopolymers obtained by individually polymerizing styrene-based monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers each obtained by copolymerizing two or more styrene-based monomers, copolymers of styrene-based monomers and other monomers that can be copolymerized with styrene-based monomers, and hydrogenated products thereof, can be used. One of these styrene-based resins may be used individually, or two or more of these styrene-based resins may be used in combination.

Examples of the other monomers include: acrylonitriles such as acrylonitrile and methacrylonitrile; acrylics; unsaturated carboxylic acids such as methacrylic acid; unsaturated carboxylic acid esters such as methyl acrylate and methyl methacrylate; conjugated dienes such as terpene, chloroprene, and butadiene isoprene; olefins such as 1-butene and 1-pentene; α, β-unsaturated carboxylic acids or acid anhydrides thereof such as maleic anhydride. One of these monomers may be used individually, or two or more of these monomers may be used in combination.

For the reason that the effect tends to be more favorably achieved, the styrene-based resin is preferably an α-methylstyrene-based resin (an α-methylstyrene homopolymer, a copolymer of α-methylstyrene and styrene, etc.), and more preferably a copolymer of a-methylstyrene and styrene.

The softening point of the styrene-based resin is preferably not lower than 50°C and more preferably not lower than 80°C, and is preferably not higher than 120°C and more preferably not higher than 100°C. When the softening point of the styrene-based resin is within the above range, the effect tends to be more favorably achieved.

In the present invention, the softening point of a resin is a softening point that is measured with a ring and ball softening point measuring device according to JIS K6220-1: 2001 and that is a temperature at which a ball has descended.

The amount of the styrene-based resin per 100 parts by mass of the rubber component only needs to be adjusted as appropriate within a range that satisfies expressions (A) and (B), but is preferably not less than 1 part by mass, more preferably not less than 3 parts by mass, and further preferably not less than 5 parts by mass, and is preferably not greater than 40 parts by mass, more preferably not greater than 30 parts by mass, and further preferably not greater than 20 parts by mass. When the amount of the styrene-based resin is within the above range, the effect tends to be more favorably achieved.

The rubber composition contains a terpene-based resin.

The terpene-based resin is a polymer containing a terpene-based compound (terpene-based monomer) as a constituent monomer, and examples of the terpene-based resin include a polymer obtained by polymerization with a terpene-based compound as a main component (not less than 50% by mass). Specifically, a polyterpene resin obtained by polymerizing a terpene-based compound, an aromatic modified terpene resin obtained by polymerizing a terpene-based compound and an aromatic compound, hydrogenated products thereof, etc., can be used. One of these resins may be used individually, or two or more of these resins may be used in combination.

The terpene-based compounds are hydrocarbons represented by a composition of $(C_5H_8)_n$ and oxygenated derivatives thereof, and are compounds having, as a basic backbone, a terpene classified into monoterpene ($C_{10}H_{16}$), sesquiterpene ($C_{15}H_{24}$), and diterpene ($C_{20}H_{32}$) Examples of the terpene-based compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol. One of these terpene-based compounds may be used individually, or two or more of these terpene-based compounds may be used in combination.

Examples of the aromatic compound used for the aromatic modified terpene resin include phenol-based compounds and styrene-based compounds. One of these aromatic compounds may be used individually, or two or more of these aromatic compounds may be used in combination.

For the reason that the effect of the present invention tends to be more favorably achieved, as the terpene-based resin, a polyterpene resin and an aromatic modified terpene resin (particularly, a copolymer of a terpene-based compound and a styrene-based compound) are preferable.

The softening point of the terpene-based resin is preferably not lower than 70°C and more preferably not lower

than 100°C, and is preferably not higher than 140°C and more preferably not higher than 120°C. When the softening point of the terpene-based resin is within the above range, the effect tends to be more favorably achieved.

The amount of the terpene-based resin per 100 parts by mass of the rubber component only needs to be adjusted as appropriate within a range that satisfies expressions (A) and (B), but is preferably not less than 1 part by mass, more preferably not less than 3 parts by mass, and further preferably not less than 5 parts by mass, and is preferably not greater than 40 parts by mass, more preferably not greater than 30 parts by mass, and further preferably not greater than 20 parts by mass. When the amount of the terpene-based resin is within the above range, the effect tends to be more favorably achieved.

The total amount of the styrene-based resin and the terpene-based resin per 100 parts by mass of the rubber component only needs to be adjusted as appropriate within a range that satisfies expressions (A) and (B), but is preferably not less than 2 parts by mass, more preferably not less than 6 parts by mass, and further preferably not less than 10 parts by mass, and is preferably not greater than 80 parts by mass, more preferably not greater than 60 parts by mass, and further preferably not greater than 40 parts by mass. When the total amount of the styrene-based resin and the terpene-based resin is within the above range, the effect tends to be more favorably achieved.

In the rubber composition, the amount of the styrene-based resin and the amount of the terpene-based resin satisfy the following expression (A).

$$\text{(A)}\ 0.2 \le \alpha 1/\alpha 2 \le 20$$

$\alpha 1$: the amount of the styrene-based resin per 100 parts by mass of the rubber component [parts by mass]
$\alpha 2$: the amount of the terpene-based resin per 100 parts by mass of the rubber component [parts by mass]

In expression (A), $\alpha 1/\alpha 2$ is preferably not less than 0.4, more preferably not less than 0.8, and further preferably not less than 1, and is preferably not greater than 10, more preferably not greater than 5, and further preferably not greater than 2.5. When $\alpha 1/\alpha 2$ is within the above range, the effect of the present invention tends to be more favorably achieved.

In the rubber composition, the total amount of the styrene-based resin and the terpene-based resin and the amount of the silica satisfy the following expression (B).

$$\text{(B)}\ \beta/(\alpha 1+\alpha 2) \le 8$$

$\alpha 1$: the amount of the styrene-based resin per 100 parts by mass of the rubber component [parts by mass]
$\alpha 2$: the amount of the terpene-based resin per 100 parts by mass of the rubber component [parts by mass]
$\beta$: the amount of the silica per 100 parts by mass of the rubber component [parts by mass]

In expression (B), $\beta/(\alpha 1+\alpha 2)$ is preferably not greater than 7.7 and more preferably not greater than 7.5, and is preferably not less than 1 and more preferably not less than 3. When $\beta/(\alpha 1+\alpha 2)$ is within the above range, the effect of the present invention tends to be more favorably achieved.

The rubber composition may contain another resin in addition to the styrene-based resin and the terpene-based resin. The other resin is not particularly limited as long as it is a resin generally used in the tire industry, and examples thereof include rosin-based resins, coumarone-indene resins, p-t-butylphenol acetylene resins, acrylic-based resins, C5 resins, and C9 resins. These resins may be used individually, or two or more of these resins may be used in combination.

As commercially available products of the styrene-based resin, the terpene-based resin, and the other resin, for example, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., etc., can be used.

In the case where the rubber composition contains another resin, the total amount of the styrene-based resin, the terpene-based resin, and the other resin per 100 parts by mass of the rubber component is preferably not less than 2 parts by mass, more preferably not less than 6 parts by mass, and further preferably not less than 10 parts by mass, and is preferably not greater than 80 parts by mass, more preferably not greater than 60 parts by mass, and further preferably not greater than 40 parts by mass. When the total amount of the styrene-based resin, the terpene-based resin, and the other resin is within the above range, the effect tends to be more favorably achieved.

The rubber composition preferably contains carbon black. Accordingly, the effect tends to be more favorably achieved.

The carbon black is not particularly limited, and examples thereof include N134, N110, N220, N234, N219, N339, N330, N326, N351, N550, and N762. These carbon blacks may be used individually, or two or more of these carbon blacks may be used in combination.

The nitrogen adsorption specific surface area ($N_2SA$) of the carbon black is preferably not less than 80 $m^2/g$ and more preferably not less than 110 $m^2/g$, and is preferably not greater than 140 $m^2/g$ and more preferably not greater than 120 $m^2/g$. When the nitrogen adsorption specific surface area ($N_2SA$) of the carbon black is within the above range, the effect tends to be more favorably achieved.

The $N_2SA$ of the carbon black is a value measured according to JIS K6217-2: 2001.

As the carbon black, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used.

In the case where carbon black is contained, the amount of the carbon black per 100 parts by mass of the rubber component is preferably not less than 1 part by mass and more preferably not less than 3 parts by mass, and is preferably not greater than 30 parts by mass and more preferably not greater than 15 parts by mass. When the amount of the carbon black is within the above range, the effect is more suitably achieved.

The rubber composition may contain an oil.

Examples of the oil include process oils, vegetable fats and oils, and mixtures thereof. As the process oil, for example, paraffinic process oil, aromatic process oil, or naphthenic process oil can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. These oils may be used individually, or two or more of these oils may be used in combination. Among them, process oil is preferable, and aromatic process oil is more preferable, for the reason that the effect is favorably achieved.

In the case where an oil is contained, the amount of the oil per 100 parts by mass of the rubber component is preferably not less than 1 part by mass and more preferably not less than 10 parts by mass, and is preferably not greater than 30 parts by mass and more preferably not greater than 20 parts by mass. When the amount of the oil is within the above range, the effect tends to be more favorably achieved.

The rubber composition may contain a wax.

The wax is not particularly limited, and examples thereof include: petroleum waxes such as paraffin wax and microcrystalline wax; natural waxes such as vegetable waxes and animal waxes; and synthesized waxes such as polymers of propylene, and ethylene. These waxes may be used individually, or two or more of these waxes may be used in combination. Among them, petroleum waxes are preferable, and paraffin wax is more preferable.

As the wax, for example, products of Ouchi Shinko Chemical Industrial Co., Ltd., NIPPON SEIRO CO., LTD., Seiko Chemical Co., Ltd., etc., can be used.

In the case where a wax is contained, the amount of the wax per 100 parts by mass of the rubber component is preferably not less than 1 part by mass and more preferably not less than 2 parts by mass, and is preferably not greater than 20 parts by mass and more preferably not greater than 10 parts by mass. When the amount of the wax is within the above range, the effect tends to be more favorably achieved.

The rubber composition may contain an antioxidant.

Examples of the antioxidant include: naphthylamine-based antioxidants such as phenyl-$\alpha$-naphthylamine; diphenylamine-based antioxidants such as octylated diphenylamine and 4,4'-bis($\alpha$,$\alpha$'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. These antioxidants may be used individually, or two or more of these antioxidants may be used in combination. Among them, p-phenylenediamine-based antioxidants and quinoline-based antioxidants are preferable.

As the antioxidant, for example, products of Seiko Chemical Co., Ltd., Sumitomo Chemical Co., Ltd., Ouchi Shinko Chemical Industrial Co., Ltd., Flexsys, etc., can be used.

In the case where an antioxidant is contained, the amount of the antioxidant per 100 parts by mass of the rubber component is preferably not less than 1 part by mass and more preferably not less than 2 parts by mass, and is preferably not greater than 10 parts by mass and more preferably not greater than 8 parts by mass. When the amount of the antioxidant is within the above range, the effect tends to be more favorably achieved.

The rubber composition may contain stearic acid.

As the stearic acid, a conventionally known one can be used, and, for example, products of NOF Corporation, Kao Corporation, FUJIFILM Wako Pure Chemical Corporation, New Japan Chemical Co., Ltd., etc., can be used.

In the case where stearic acid is contained, the amount of the stearic acid per 100 parts by mass of the rubber component is preferably not less than 1 part by mass and more preferably not less than 2 parts by mass, and is preferably

not greater than 10 parts by mass and more preferably not greater than 5 parts by mass. When the amount of the stearic acid is within the above range, the effect tends to be more favorably achieved.

The rubber composition may contain zinc oxide.

As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

In the case where zinc oxide is contained, the amount of the zinc oxide per 100 parts by mass of the rubber component is preferably not less than 1 part by mass and more preferably not less than 2 parts by mass, and is preferably not greater than 10 parts by mass and more preferably not greater than 5 parts by mass. When the amount of the zinc oxide is within the above range, the effect tends to be more favorably achieved.

The rubber composition may contain sulfur.

Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

As the sulfur, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

In the case where sulfur is contained, the amount of the sulfur per 100 parts by mass of the rubber component is preferably not less than 1 part by mass and more preferably not less than 1.5 parts by mass, and is preferably not greater than 5 parts by mass and more preferably not greater than 3 parts by mass. When the amount of the sulfur is within the above range, the effect tends to be more favorably achieved.

The rubber composition may contain a vulcanization accelerator.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination.

In the case where a vulcanization accelerator is contained, the amount of the vulcanization accelerator per 100 parts by mass of the rubber component is preferably not less than 1 part by mass and more preferably not less than 4 parts by mass, and is preferably not greater than 8 parts by mass and more preferably not greater than 6 parts by mass. When the amount of the vulcanization accelerator is within the above range, the effect tends to be more favorably achieved.

In addition to the above-described components, additives that are generally used in the tire industry, such as: organic peroxides; fillers such as calcium carbonate, talc, alumina, clay, aluminum hydroxide, and mica may be further blended in the rubber composition. Each of the amounts of these additives per 100 parts by mass of the rubber component is preferably 0.1 to 200 parts by mass.

For example, the rubber composition can be produced by a method in which the above respective components are kneaded using a rubber kneading device such as an open roll and a Banbury mixer and then vulcanization is performed.

As for the kneading conditions, in a base kneading step of kneading the additives other than a vulcanizing agent and the vulcanization accelerator, the kneading temperature is normally 100 to 180°C and preferably 120 to 170°C. In a finish kneading step of kneading the vulcanizing agent and the vulcanization accelerator, the kneading temperature is normally not higher than 120°C and preferably 85 to 110°C. In addition, a composition obtained by kneading the vulcanizing agent and the vulcanization accelerator is normally subjected to vulcanization treatment such as press vulcanization. The vulcanization temperature is normally 140 to 190°C and preferably 150 to 185°C. The vulcanization time is normally 5 to 15 minutes.

The rubber composition is used for treads (cap treads).

The pneumatic tire of the present invention is produced by a normal method using the above rubber composition.

Specifically, an unvulcanized tire is formed by extruding the rubber composition in an unvulcanized state so as to correspond to the shape of a tread, and forming the extruded rubber composition together with other tire members on a tire forming machine by a general method. A tire is obtained by heating and pressurizing the unvulcanized tire in a vulcanizing machine.

The above pneumatic tire can be used as a tire for a passenger car, a tire for a truck or a bus, a tire for a two-wheeled automotive vehicle, and a high-performance tire, and is particularly suitable as a tire for a passenger car.

## EXAMPLES

The present invention will be specifically described by means of examples, but the present invention is not

limited to these examples.

Various chemicals used in examples and comparative examples are described below.

SBR1: SLR6430 (styrene content: 40% by mass, vinyl content: 24% by mass, Mw: 1.36 million) manufactured by Dow Chemical Co.
SBR2: Y031 (styrene content: 27.1% by mass, vinyl content: 57.5% by mass, Mw: 448 thousand) manufactured by Asahi Kasei Corporation.
BR: BR 150B (cis content: 98% by mass) manufactured by Ube Industries, Ltd.
Carbon black: Diablack N220 ($N_2SA$: 114 $m^2/g$) manufactured by Mitsubishi Chemical Corporation.
Silica: Ultrasil VN3 ($N_2SA$: 175 $m^2/g$) manufactured by Evonik Degussa GmbH.
Silane coupling agent 1: NXT (3-octanoylthiopropyltriethoxysilane) manufactured by Momentive.
Silane coupling agent 2: Si266 (bis(3-triethoxysilylpropyl)disulfide) manufactured by Evonik Degussa GmbH.
Styrene-based resin 1: SYLVARES SA85 (a copolymer of $\alpha$-methylstyrene and styrene, softening point: 85°C) manufactured by Arizona Chemical Company.
Styrene-based resin 2: ESCOREZ 1102B (a copolymer of isoprene and styrene, softening point: 95°C) manufactured by Exxon Mobil Corporation.
Terpene-based resin 1: SYLVARES ZT105LT (a copolymer of a terpene-based compound and styrene, softening point: 105°C) manufactured by Arizona Chemical Company.
Terpene-based resin 2: SYLVARES TR105 (a polyterpene resin, softening point: 105°C) manufactured by Arizona Chemical Company.
Oil: A/O Mix manufactured by Sankyo Yuka Kogyo K.K.
Zinc oxide: Zinc Oxide No. 1 manufactured by Mitsui Mining & Smelting Co., Ltd.
Stearic acid: stearic acid manufactured by NOF Corporation.
Antioxidant: Nocrac 6C (N-(1,3-dimethylbutyl)-N'-phenyl-p-phenylenediamine) manufactured by Ouchi Shinko Chemical Industrial Co., Ltd.
Sulfur: powdery sulfur manufactured by Tsurumi Chemical Industry Co., Ltd.
Vulcanization accelerator 1: Nocceler CZ (N-cyclohexyl-2-benzothiazolyl sulfenamide) manufactured by Ouchi Shinko Chemical Industrial Co., Ltd.
Vulcanization accelerator 2: Nocceler D (1,3-diphenylguanidine) manufactured by Ouchi Shinko Chemical Industrial Co., Ltd.

(Examples and Comparative Examples)

In accordance with each of the blending formulas shown in Table 1, the chemicals other than the sulfur and the vulcanization accelerator were kneaded under a condition of 150°C for 5 minutes using a 1.7-L Banbury mixer manufactured by Kobe Steel, Ltd., to obtain a kneaded product.

Next, the sulfur and the vulcanization accelerator were added to the obtained kneaded product, and the mixture was kneaded under a condition of 80°C for 5 minutes using an open roll to obtain an unvulcanized rubber composition.

The obtained unvulcanized rubber composition was formed into the shape of a tread and attached together with other tire members to form an unvulcanized tire, and the unvulcanized tire was press-vulcanized under a condition of 150°C for 12 minutes to produce a test tire (size: 195/65R15). The following evaluations were made by using the obtained test tires, and the results are shown in Table 1.

In Table 1, an evaluation reference for Examples 1-1 to 1-7 is Comparative Example 1-1, an evaluation reference for Example 2 is Comparative Example 2, an evaluation reference for Example 3 is Comparative Example 3, and an evaluation reference for Example 4 is Comparative Example 4.

(Dry Grip Performance)

The respective test tires were mounted to all the wheels of a vehicle (a front wheel drive vehicle with an engine displacement of 2000 cc, produced in Japan), and the vehicle was caused to actually run 10 laps on a test course having a dry asphalt road surface. The test place was the Okayama test course of Sumitomo Rubber Industries, Ltd., and the air temperature was 20 to 25°C. Then, test drivers made evaluation for stability of control at steering during running, and each evaluation result is indicated as an index with the result of the corresponding evaluation reference being set as 100 (dry grip performance index). A higher index indicates that the stability of control is higher and the dry grip performance is better.

(Wet Grip Performance)

The respective test tires were mounted to all the wheels of a vehicle (a front wheel drive vehicle with an engine displacement of 2000 cc, produced in Japan), and a braking distance from an initial speed of 100 km/h was obtained on a wet asphalt road surface. The braking distance is indicated as an index with the result of the corresponding evaluation reference being set as 100 (wet grip performance index). A higher index indicates that the braking distance is shorter and the wet grip performance is better.

(Abrasion Resistance)

A volume loss amount of a test piece cut out from the tread of each test tire was measured using a LAT tester (Laboratory Abrasion and Skid Tester) under conditions of a load of 40 N, a speed of 20 km/h, and a slip angle of 5°. The volume loss amount is indicated as an index with the result of the corresponding evaluation reference being set as 100 (abrasion resistance index). A higher index indicates that the volume loss amount is smaller and the abrasion resistance is better.

[0098] [Table 1]

| | | Comparative Example | | | | Example | | | | | | | Comp. Ex. | Example | Comp. Ex. | Example | Comp. Ex. | Example |
|---|---|---|---|---|---|---|---|---|---|---|---|---|---|---|---|---|---|---|
| | | 1-1 | 1-2 | 1-3 | 1-4 | 1-1 | 1-2 | 1-3 | 1-4 | 1-5 | 1-6 | 1-7 | 2 | 2 | 3 | 3 | 4 | 4 |
| Composition (parts by mass) | SBR1 | 80 | 80 | 80 | 80 | 80 | 80 | 80 | 80 | 80 | 80 | 80 | 70 | 70 | 70 | 70 | 70 | 70 |
| | SBR2 | | | | | | | | | | | | 20 | 20 | 20 | 20 | 20 | 20 |
| | BR | 20 | 20 | 20 | 20 | 20 | 20 | 20 | 20 | 20 | 20 | 20 | 10 | 10 | 10 | 10 | 10 | 10 |
| | Carbon black | 5 | 5 | 5 | 5 | 5 | 5 | 5 | 5 | 5 | 5 | 5 | 3 | 3 | 3 | 3 | 3 | 3 |
| | Silica | 75 | 75 | 75 | 75 | 75 | 75 | 75 | 75 | 75 | 75 | 75 | 85 | 85 | 90 | 90 | 100 | 100 |
| | Silane coupling agent 1 | | 6 | 6 | 6 | 6 | 6 | 6 | 6 | 6 | 6 | 6 | | 7 | | 8 | | 9 |
| | Silane coupling agent 2 | 6 | | | | | | | | | | | 7 | | 8 | | 9 | |
| | Styrene-based resin 1 | | 1 | 9.6 | 4.5 | 5 | 3 | 7 | 9 | 9.5 | | 5 | | 7 | | 10 | | 16 |
| | Styrene-based resin 2 | | | | | | | | | | 5 | | | | | | | |
| | Terpene-based resin 1 | | 9 | 0.4 | 4.5 | 5 | 7 | 3 | 1 | 0.5 | 5 | | | 8 | | 10 | | 14 |
| | Terpene-based resin 2 | | | | | | | | | | | 5 | | | | | | |
| | Oil | 22.5 | 15 | 15 | 15 | 15 | 15 | 15 | 15 | 15 | 15 | 15 | 30 | 15 | 35 | 15 | 40 | 10 |
| | Zinc oxide | 2 | 2 | 2 | 2 | 2 | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 | 2 | 2 | 2 | 2 | 2 | 2 | 2 | 2 | 2 |
| | Vulcanization accelerator 2 | 2 | 2 | 2 | 2 | 2 | 2 | 2 | 2 | 2 | 2 | 2 | 2 | 2 | 2 | 2 | 2 | 2 |
| Total vinyl content of SBR (% by mass) | | 24 | 24 | 24 | 24 | 24 | 24 | 24 | 24 | 24 | 24 | 24 | 31.44 | 31.44 | 31.44 | 31.44 | 31.44 | 31.44 |
| Styrene-based resin amount/terpene-based resin amount | | | 0.11 | 24 | 1 | 1 | 0.43 | 2.33 | 9 | 19 | 1 | 1 | | 0.88 | | 1 | | 1.14 |
| Styrene-based resin amount + terpene-based resin amount | | | 10 | 10 | 9 | 10 | 10 | 10 | 10 | 10 | 10 | 10 | | 15 | | 20 | | 30 |
| Silica amount/(styrene-based resin amount + terpene-based resin amount) | | | 7.5 | 7.5 | 8.33 | 7.5 | 7.5 | 7.5 | 7.5 | 7.5 | 7.5 | 7.5 | | 5.67 | | 4.5 | | 3.33 |
| Evaluation | Dry grip performance index | 100 | 105 | 104 | 104 | 105 | 103 | 108 | 100 | 106 | 110 | 109 | 100 | 109 | 100 | 108 | 100 | 107 |
| | Wet grip performance index | 100 | 100 | 101 | 100 | 113 | 117 | 110 | 104 | 105 | 109 | 111 | 100 | 120 | 100 | 124 | 100 | 125 |
| | Abrasion resistance index | 100 | 95 | 95 | 97 | 106 | 105 | 109 | 110 | 101 | 104 | 105 | 100 | 107 | 100 | 106 | 100 | 105 |
| | Sum of indexes | 300 | 300 | 300 | 301 | 324 | 325 | 327 | 314 | 312 | 323 | 325 | 300 | 336 | 300 | 338 | 300 | 337 |

As shown in Table 1, in the Examples in which a rubber component containing SBR, silica, a mercapto silane coupling agent, a styrene-based resin, and a terpene-based resin are contained, the total vinyl content of the SBR is less than 35% by mass, and expressions (A) and (B) are satisfied, the dry grip performance, the wet grip performance, and the abrasion resistance were improved in a balanced manner.

Provided are: a rubber composition, for a tread, that can improve dry grip performance, wet grip performance, and abrasion resistance in a balanced manner; and a pneumatic tire in which the rubber composition is used. The rubber composition for a tread contains: a rubber component containing styrene-butadiene rubber; silica; a mercapto silane coupling agent; a styrene-based resin; and a terpene-based resin, a total vinyl content of the styrene-butadiene rubber is less than 35% by mass, and the following expressions (A) and (B) are satisfied.

$$\text{(A) } 0.2 \leq \alpha 1/\alpha 2 \leq 20$$

$$\text{(B) } \beta/(\alpha 1+\alpha 2) \leq 8$$

$\alpha 1$: an amount of the styrene-based resin per 100 parts by mass of the rubber component [parts by mass]
$\alpha 2$: an amount of the terpene-based resin per 100 parts by mass of the rubber component [parts by mass]
$\beta$: an amount of the silica per 100 parts by mass of the rubber component [parts by mass]

## Claims

1. A rubber composition for a tread, the rubber composition containing: a rubber component containing styrene-butadiene rubber; silica; a mercapto silane coupling agent; a styrene-based resin; and a terpene-based resin, wherein

   a total vinyl content of the styrene-butadiene rubber is less than 35% by mass, and
   the following expressions (A) and (B) are satisfied,

$$(A)\ 0.2 \leq \alpha 1/\alpha 2 \leq 20$$

$$(B)\ \beta/(\alpha 1+\alpha 2) \leq 8$$

   $\alpha 1$: an amount of the styrene-based resin per 100 parts by mass of the rubber component [parts by mass]
   $\alpha 2$: an amount of the terpene-based resin per 100 parts by mass of the rubber component [parts by mass]
   $\beta$: an amount of the silica per 100 parts by mass of the rubber component [parts by mass].

2. The rubber composition for a tread according to claim 1, wherein the expression (A) is $0.4 \leq \alpha 1/\alpha 2 \leq 2.5$.

3. The rubber composition for a tread according to claim 1 or 2, wherein an amount of the styrene-butadiene rubber in 100% by mass of the rubber component is not less than 60% by mass.

4. The rubber composition for a tread according to any one of claims 1 to 3, wherein the styrene-butadiene rubber has a weight average molecular weight not less than 400 thousand.

5. The rubber composition for a tread according to any one of claims 1 to 4, wherein the mercapto silane coupling agent is a silane coupling agent represented by the following formula (S1),

[Chem. 1]

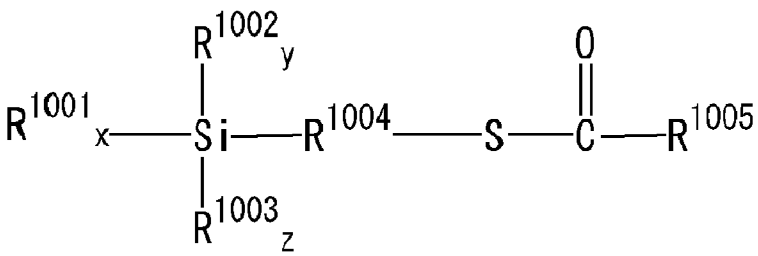

(S1)

(wherein $R^{1001}$ represents a monovalent group selected from -Cl, -Br, $-OR^{1006}$, $-O(O=)CR^{1006}$, $-ON=CR^{1006}R^{1007}$, $-NR^{1006}R^{1007}$, and $-(OSiR^{1006}R^{1007})_h(OSiR^{1006}R^{1007}R^{1008})$ (wherein $R^{1006}$, $R^{1007}$, and $R^{1008}$ may be the same or may be different from each other and each represent a hydrogen atom or a monovalent hydrocarbon group having 1 to 18 carbon atoms, and an average of "h" is 1 to 4), $R^{1002}$ represents $R^{1001}$, a hydrogen atom, or a monovalent hydrocarbon group having 1 to 18 carbon atoms, $R^{1003}$ represents a $-[O(R^{1009}O)_j]-$ group ($R^{1009}$ is an alkylene group having 1 to 18 carbon atoms, and "j" is an integer from 1 to 4), $R^{1004}$ represents a divalent hydrocarbon group having 1 to 18 carbon atoms, $R^{1005}$ represents a monovalent hydrocarbon group having 1 to 18 carbon atoms, and "x", "y", and "z" are numerals that satisfy the relationships of $x + y + 2z = 3$, $0 \leq x \leq 3$, $0 \leq y \leq 2$, and $0 \leq z \leq 1$.).

6. A pneumatic tire having a tread produced using the rubber composition according to any one of claims 1 to 5.

## Patentansprüche

1. Kautschukzusammensetzung für eine Lauffläche, wobei die Kautschukzusammensetzung enthält: eine Kautschukkomponente, die Styrol-Butadien-Kautschuk enthält; Siliciumdioxid; ein Mercaptosilankopplungsmittel; ein Styrolbasiertes Harz; und ein Terpenbasiertes Harz, wobei
ein Gesamtvinylgehalt des Styrol-Butadien-Kautschuks weniger als 35 Massen-% ist und die folgenden Ausdrücke (A) und (B) erfüllt werden,

$$(A)\ 0{,}2 \leq \alpha 1/\alpha 2 \leq 20$$

$$(B)\ \beta/(\alpha 1+\alpha 2) \leq 8$$

$\alpha 1$ : eine Menge des Styrol-basierten Harzes pro 100 Massenteile des Kautschukbestandteils [Massenteile]
$\alpha 2$: eine Menge des Terpen-basierten Harzes pro 100 Massenteile des Kautschukbestandteils [Massenteile]
$\beta$: eine Menge Siliciumdioxid pro 100 Massenteile des Kautschukbestandteils [Massenteile].

2. Kautschukzusammensetzung für eine Lauffläche nach Anspruch 1, wobei der Ausdruck (A) $0{,}4 \leq \alpha 1/\alpha 2 \leq 2{,}5$ ist.

3. Kautschukzusammensetzung für eine Lauffläche nach Anspruch 1 oder 2, wobei eine Menge des Styrol-Butadien-Kautschuks in 100 Massen-% des Kautschukbestandteils nicht weniger als 60 Massen-% ist.

4. Kautschukzusammensetzung für eine Lauffläche nach einem der Ansprüche 1 bis 3, wobei der Styrol-Butadien-Kautschuk ein gewichtsmittleres Molekulargewicht von nicht weniger als 400 Tausend aufweist.

5. Kautschukzusammensetzung für eine Lauffläche nach einem der Ansprüche 1 bis 4, wobei das Mercaptosilankopplungsmittel ein durch die folgende Formel (S1) dargestelltes Silankopplungsmittel ist,

[Chem. 1]

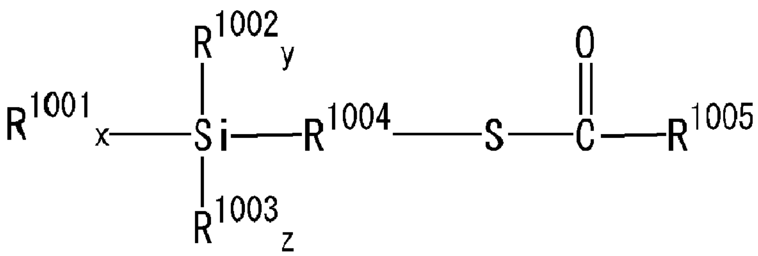

(S1)

(wobei $R^{1001}$ eine einwertige Gruppe ausgewählt aus -Cl, -Br, $-OR^{1006}$, $-O(O=)CR^{1006}$ , $-ON=CR^{1006}R^{1007}$, $-NR^{1006}R^{1007}$, und $-(OSiR^{1006}R^{1007})_h(OSiR^{1006}R^{1007}R^{1008})$ darstellt (wobei $R^{1006}$, $R^{1007}$, und $R^{1008}$ die gleichen oder unterschiedlich voneinander sein können und jedes ein Wasserstoffatom oder eine einwertige Kohlenwasserstoffgruppe mit 1 bis 18 Kohlenstoffatomen darstellt, und ein Mittelwert von "h" 1 bis 4 ist), $R^{1002}$ $R^{1001}$, ein Wasserstoffatom, oder eine einwertige Kohlenwasserstoffgruppe mit 1 bis 18 Kohlenstoffatomen darstellt, $R^{1003}$ eine $-[O(R^{1009}O)_j]$-Gruppe darstellt ($R^{1009}$ ist eine Alkylengruppe mit 1 bis 18 Kohlenstoffatomen und "j" ist eine ganze Zahl von 1 bis 4), $R^{1004}$ eine zweiwertige Kohlenwasserstoffgruppe mit 1 bis 18 Kohlenstoffatomen darstellt, $R^{1005}$ eine einwertige Kohlenwasserstoffgruppe mit 1 bis 18 Kohlenstoffatomen darstellt, und "x", "y" und "z" sind Ziffern, die die Beziehung $x + y + 2z = 3{,}0 \leq x \leq 3{,}0 \leq y \leq 2$ und $0 \leq z \leq 1$ erfüllen.).

6. Luftreifen, der eine Lauffläche aufweist, die unter Verwendung der Kautschukzusammensetzung nach einem der Ansprüche 1 bis 5 hergestellt ist.

**Revendications**

1. Composition de caoutchouc pour une bande de roulement, la composition de caoutchouc contenant : un composant caoutchouc contenant un caoutchouc de styrène-butadiène ; de la silice ; un agent de couplage de type mercaptosilane ; une résine à base de styrène ; et une résine à base de terpène, dans laquelle la teneur totale en vinyle du caoutchouc de styrène-butadiène est inférieure à 35 % en masse, et les expressions (A) et (B) suivantes sont

satisfaites,

$$(A)\quad 0,2 \leq \alpha 1/\alpha 2 \leq 20$$

$$(B)\quad \beta/(\alpha 1+\alpha 2) \leq 8$$

$\alpha 1$ : la quantité de la résine à base de styrène pour 100 parties en masse du composant caoutchouc [parties en masse]
$\alpha 2$ : la quantité de la résine à base de terpène pour 100 parties en masse du composant caoutchouc [parties en masse]
$\beta$ : la quantité de la silice pour 100 parties en masse du composant caoutchouc [parties en masse].

**2.** Composition de caoutchouc pour une bande de roulement selon la revendication 1, dans laquelle l'expression (A) est $0,4 \leq \alpha 1/\alpha 2 \leq 2,5$.

**3.** Composition de caoutchouc pour une bande de roulement selon la revendication 1 ou 2, dans laquelle la quantité du caoutchouc de styrène-butadiène dans 100 % en masse du composant caoutchouc n'est pas inférieure à 60 % en masse.

**4.** Composition de caoutchouc pour une bande de roulement selon l'une quelconque des revendications 1 à 3, dans laquelle le caoutchouc de styrène-butadiène a une masse moléculaire moyenne en masse non inférieure à 400 000.

**5.** Composition de caoutchouc pour une bande de roulement selon l'une quelconque des revendications 1 à 4, dans laquelle l'agent de couplage de type mercapto-silane est un agent de couplage de type silane représenté par la formule (S1) suivante,

[formule chimique 1]

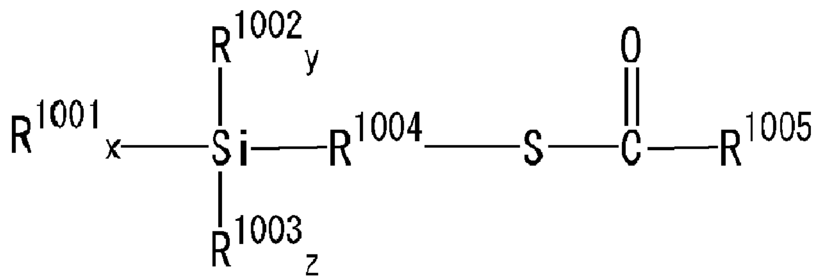

(S1)

(dans laquelle $R^{1001}$ représente un groupe monovalent choisis parmi -Cl, -Br, $-OR^{1006}$, $-O(O=)CR^{1006}$, $-ON=CR^{1006}R^{1007}$, $-NR^{1006}R^{1007}$, et $-(OSiR^{1006}R^{1007})_h(OSiR^{1006}R^{1007}R^{1008})$ (où chacun de $R^{1006}$, $R^{1007}$ et $R^{1008}$, qui peuvent être identiques ou différents, représente un atome d'hydrogène ou un groupe hydrocarboné monovalent ayant 1 à 18 atomes de carbone, et la moyenne de "h" est de 1 à 4), $R^{1002}$ représente $R^{1001}$, un atome d'hydrogène, ou un groupe hydrocarboné monovalent ayant 1 à 18 atomes de carbone, $R^{1003}$ représente un groupe $-[(R^{1009}O)j]$ - ($R^{1009}$ est un groupe alkylène ayant 1 à 18 atomes de carbone, et "j" est un entier de 1 à 4), $R^{1004}$ représente un groupe hydrocarboné divalent ayant 1 à 18 atomes de carbone, $R^{1005}$ représente un groupe hydrocarboné monovalent ayant 1 à 18 atomes de carbone, et "x", "y" et "z" sont des nombres et satisfont aux relations $x + y + 2z = 3$, $0 \leq x \leq 3$, $0 \leq y \leq 2$ et $0 \leq z \leq 1$) .

**6.** Pneu ayant une bande de roulement produite par utilisation de la composition de caoutchouc de l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017141405 A
- JP 2016047887 A
- WO 2013157545 A
- JP 2014218549 A